# EUROPÄISCHE PATENTSCHRIFT

(11) **EP 2 643 622 B1**
(45) Veröffentlichungstag und Bekanntmachung des Hinweises auf die Patenterteilung: **10.09.2014**
(21) Anmeldenummer: 11776123.9
(22) Anmeldetag: 27.10.2011
(51) Int. Cl.: F16L 3/223

(54) **BEFESTIGUNGSSYSTEM FÜR REIHEN NEBENEINANDERLIEGENDER LEITUNGEN**
FIXING SYSTEM FOR ROWS OF ADJACENT CONDUITS
SYSTÈME DE FIXATION POUR UNE FILE DE CONDUITES JUXTAPOSÉES

(30) Priorität: 27.11.2010 DE 102010052785
(43) Veröffentlichungstag der Anmeldung: 02.10.2013
(73) Patentinhaber: HYDAC Accessories GmbH, 66280 Sulzbach/Saar (DE)
(72) Erfinder: GEIMER, Gisbert, 66663 Merzig (DE)
(74) Vertreter: Bartels, Martin Erich Arthur
(86) Internationale Anmeldenummer: PCT/EP2011/005431
(87) Internationale Veröffentlichungsnummer: WO 2012/069124

(56) Entgegenhaltungen:
- EP-A1- 0 454 876
- DE-U1- 20 300 794
- DE-U1-202005 001 921
- US-A1- 2003 044 259

## Beschreibung

Die Erfindung betrifft ein Befestigungssystem für Reihen nebeneinander liegender Leitungen an Wandflächen mit den Merkmalen im Oberbegriff von Anspruch 1.

Reihen mit einer größeren Anzahl von Leitungen müssen häufig bei industriellen Anlagen oder Bauwerken für die Kühlung oder Beheizung verlegt werden. So muß in Biogasreaktoren zur Prozeßunterstützung Wärmeenergie zugeführt werden. Dies geschieht in der Regel über Schläuche aus Kunststoff oder Rohre aus Edelstahl, die an der inneren Wandfläche des Biogasreaktors in Reihen aus übereinander liegenden Leitungen angeordnet sind, die an der Wandfläche befestigt werden müssen. Da es sich hierbei um ausgedehnte Reihen mit einer großen Anzahl von Leitungen, die im Einzelfall bis zu 60 Schläuche oder Rohre betragen kann, handelt, gestaltet sich die Montage für die Fixierung und Wandbefestigung der großen Anzahl von Leitungen äußerst schwierig und zeitaufwendig.

Die US 2003/0044259 A1 beschreibt ein Befestigungssystem für Reihen nebeneinander liegender Leitungen an Wandflächen, mit einer an der betreffenden Wandfläche verankerbaren Trägerleiste, die eine Reihe von in Längsrichtung der Trägerleiste hintereinander angeordneter Aufnahmemulden für je eine sich quer zur Längsrichtung erstreckende Leitung aufweist, mit am Einlegebereich für die Leitungen an den Aufnahmemulden vorgesehenen Rastelementen zur Vorfixierung der in die jeweilige Aufnahmemulde eingelegten Leitung und mit einer Deckelleiste, die als die endgültige Fixierung sämtlicher eingelegter Leitungen bildendes Verschlusselement mit der Trägerleiste verbindbar ist, wobei die Trägerleiste eine ebene Unterseite zur Anlage an der Wandfläche und oberhalb der Unterseite zwischen den Aufnahmemulden einen ebenen Leistenboden mit darin befindlichen teilzylindrischen Vertiefungen für die Aufnahmemulden aufweist. An den Leistenboden ist die Deckelleiste anlegbar, wobei in der Deckelleiste ebenfalls Vertiefungen für die Leitungen ausgebildet sind.

Die DE 203 00 794 U1 betrifft eine Vorrichtung zur Befestigung von Heizleitungen. In einer Befestigungsschiene sind schräg verlaufende Aussparungen für die Heizleitungen vorgesehen. Die Aussparungen sind durch eine Abdeckleiste verdeckbar.

Die EP 0 454 876 A1 zeigt eine zweiteilige Rohrschelle auf. Ein Aufnahmeteil ist an einer Wand verankerbar und weist Aufnahmemulden für Leitungen auf. Randseitig sind an den Aufnahmemulden gegeneinander vorspringende Rastnasen vorgesehen. Die Aufnahmemulden sind durch ein zu dem Aufnahmeteil komplementäres Abdeckteil verschließbar.

Die DE 20 2005 001 921 U1 beschreibt ein Schienenaggregat. Es ist ein U-förmiges Profil vorgesehen, in dessen Seitenwänden Aussparungen für Leitungen vorgesehen sind. Die Aussparungen weisen gegeneinander vorspringende Rastnasen auf. Mittels eines Bodens ist das Schienenaggregat an einer Wand befestigbar.

Im Hinblick auf diese Problematik liegt der Erfindung die Aufgabe zugrunde, ein Befestigungssystem zur Verfügung zu stellen, das die Anbringung von Leitungsreihen, selbst bei einer größeren Anzahl von Leitungen, beträchtlich erleichtert und vereinfacht.

Erfindungsgemäß löst diese Aufgabe ein Befestigungssystem, das die Merkmale des Patentanspruches 1 in seiner Gesamtheit aufweist.

Danach ist bei der Erfindung eine Trägerleiste vorgesehen, die eine Reihe von in Längsrichtung der Trägerleiste hintereinander angeordnete Aufnahmemulden für je eine Leitung aufweist. Zum einen verringert sich dadurch der Zeit- und Materialaufwand für Verschraubungen, weil pro Trägerleiste lediglich ein Verankerungsmittel, beispielsweise in Form einer Wandbefestigungsschraube erforderlich ist. Hinzu kommt eine besonders ins Gewicht fallende Vereinfachung des Montagevorganges dadurch, dass die Aufnahmemulden für die Leitungen an der Trägerleiste mit Rastelementen zur Vorfixierung der in die jeweilige Aufnahmemulde eingelegten Leitung versehen sind. Diese können somit nacheinander in den Aufnahmemulden in Stellung gebracht werden, ohne dass Maßnahmen erforderlich sind, die ein Herausfallen der Leitungen vor der endgültigen Fixierung verhindern. Diese Vorfixierung ist von besonderem Vorteil, weil die Leitungsreihen in der Regel an senkrechten Wandflächen, wie der Reaktorinnenwand von Biogasanlagen, angebracht werden müssen. Der Abschluß der Fixierung der Leitungen erfolgt ebenfalls mit geringem Arbeitsaufwand, da die endgültige Fixierung sämtlicher eingelegter Leitungen durch Anbringen einer Deckefleiste erfolgt.

Die Montage gestaltet sich besonders einfach, wenn die Deckelleiste durch Verclipsen mit der Trägerleiste verbindbar ist. Stattdessen oder zusätzlich könnte die Deckelleiste auch mit der Trägerleiste verschraubbar sein.

Das erfindungsgemäße Befestigungssystem ist für Leitungsreihen mit beliebig großer Anzahl von Leitungen einsetzbar. Diesbezüglich kann die Anordnung so getroffen sein, dass die Trägerleisten durch an ihren Enden vorgesehene Anschlußelemente für gewünschte Längen der Leitungsreihen zusammensteckbar sind.

Erfindungsgemäß weist die Trägerleiste eine ebene Unterseite zur Anlage an der Wandfläche und oberhalb der Unterseite zwischen den Aufnahmemulden einen ebenen Leistenboden mit darin befindlichen teilzylindrischen Vertiefungen für die Aufnahmemulden auf, zwischen denen vom Leistenboden Seitenwände mit U-förmigen, die Aufnahmemulden begrenzenden Aussparungen vorstehen, wobei an den Endrändern der Aussparungen gegeneinander vorspringende Rastnasen die Rastelemente für die Vorfixierung der eingelegten Leitungen bilden. Die teilzylindrischen Vertiefungen zur Bildung der Aufnahmemulden können für Leitungen gleichen Durchmessers mit gleichem Krümmungsradius oder mit unterschiedlichen Krümmungsradien gestaltet sein, wenn in besonderen Fällen mittels einer einzelnen Trägerleiste Leitungen unterschiedlicher Durchmesser fixiert werden sollen.

Vorzugsweise ist die Anordnung so getroffen, dass die Seitenwände der Trägerleiste mit dem zwischen ihnen befindlichen Leistenboden ein U-Profil begrenzen, in das die Deckelleiste zwischen die Seitenwände einsetzbar ist. Durch eine passende Aufnahme der Deckelleiste zwischen den Seitenwänden ergibt sich eine hohe Steifigkeit des Systems.

Bei vorteilhaften Ausführungsbeispielen weist die Deckel leiste zur Anlage am Leistenboden der Trägerleiste eine ebene Deckfläche auf, in der Vertiefungen als Abschluß der Aufnahmemulden ausgebildet sind.

Hinsichtlich der Gestaltung der Schnappverbindung (Verclipsung) zwischen Deckelleiste und Trägerleiste kann die Anordnung mit Vorteil so getroffen sein, dass an der Deckelleiste senkrecht zur Längsachse seitlich vorspringende Rastzapfen vorgesehen sind, die in zugeordnete, mit Rastnasen versehene Rastkerben in den Seitenwänden der Trägerleiste einschnappbar sind.

Für eine einfache und bequeme Ausrichtung beim Anbringen der Deckelleiste an der Trägerleiste sind vorzugsweise an der Deckel leiste aus der Deckfläche vorspringende Führungszapfen zur Zusammenwirkung mit in der Trägerleiste vorgesehenen Führungsbohrungen vorhanden.

Beim erfindungsgemäßen Befestigungssystem können Trägerleiste und Deckelleiste jeweils einteilig aus Kunststoff gefertigt sein, so dass sich das Befestigungssystem auch durch niedrige Herstellungskosten auszeichnet.

Die Erfindung betrifft weiter die Verwendung des Befestigungssystems zur Befestigung von Heizschläuchen oder-rohren an Wandflächen, insbesondere an der Reaktorinnenseite eines Bioreaktors.

Nachstehend ist die Erfindung anhand eines in der Zeichnung dargestellten Ausführungsbeispiels im Einzelnen erläutert. Es zeigen:
- Fig. 1: eine schematisch vereinfacht und abgebrochen gezeichnete perspektivische Schrägansicht einer Reihenanordnung von Heizleitungen in Form von Schläuchen oder Rohren an der nicht dargestellten Innenwand eines Biogasreaktors;
- Fig. 2: eine perspektivische Schrägansicht einer einzelnen Reihenleiste für acht Leitungen als Teilbestandteil der in Fig. 1 gezeigten Anordnung;
- Fig. 3: eine auseinandergezogene, perspektivische Schrägansicht der Reihenleiste von Fig. 2; und
- Fig. 4 und 5: perspektivische Schrägansichten, in denen eine Trägerleiste bzw. Deckelleiste des Ausführungsbeispiels gesondert dargestellt sind.

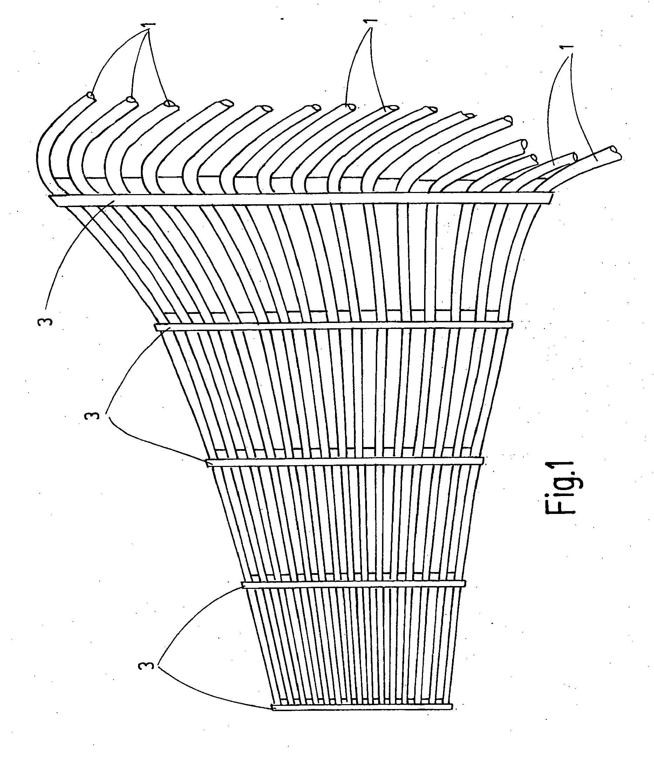

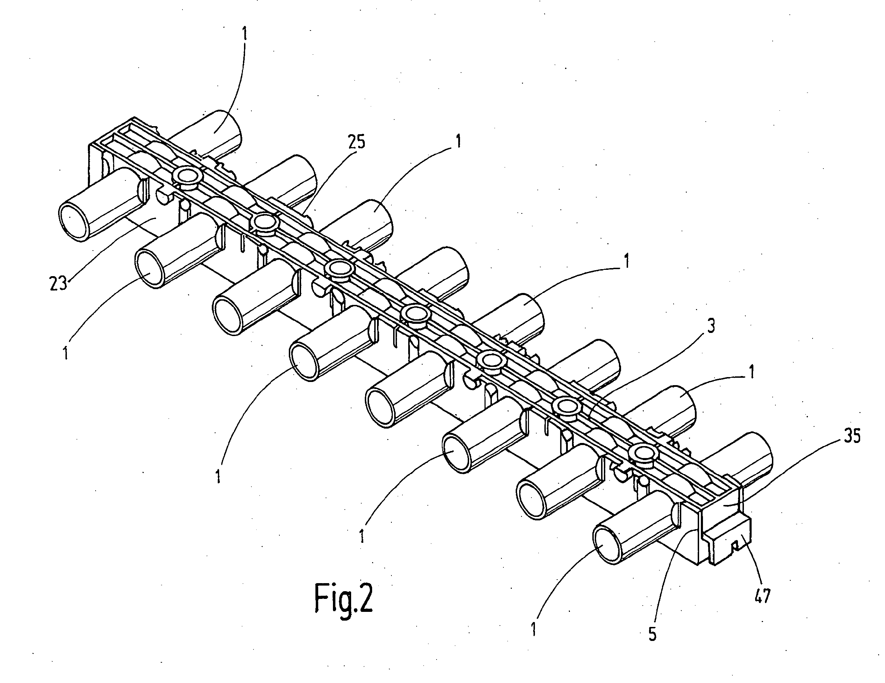

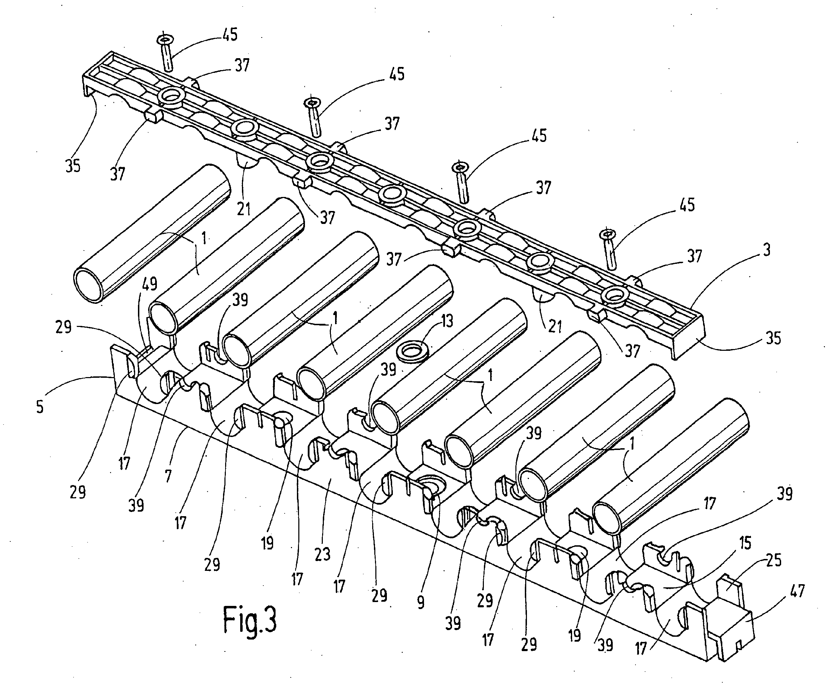

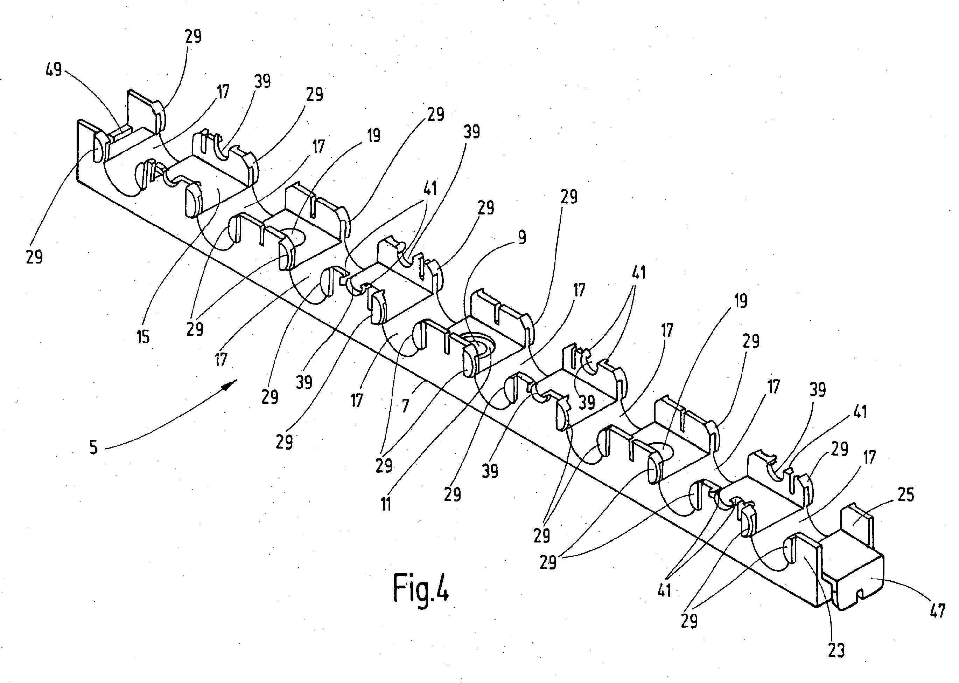

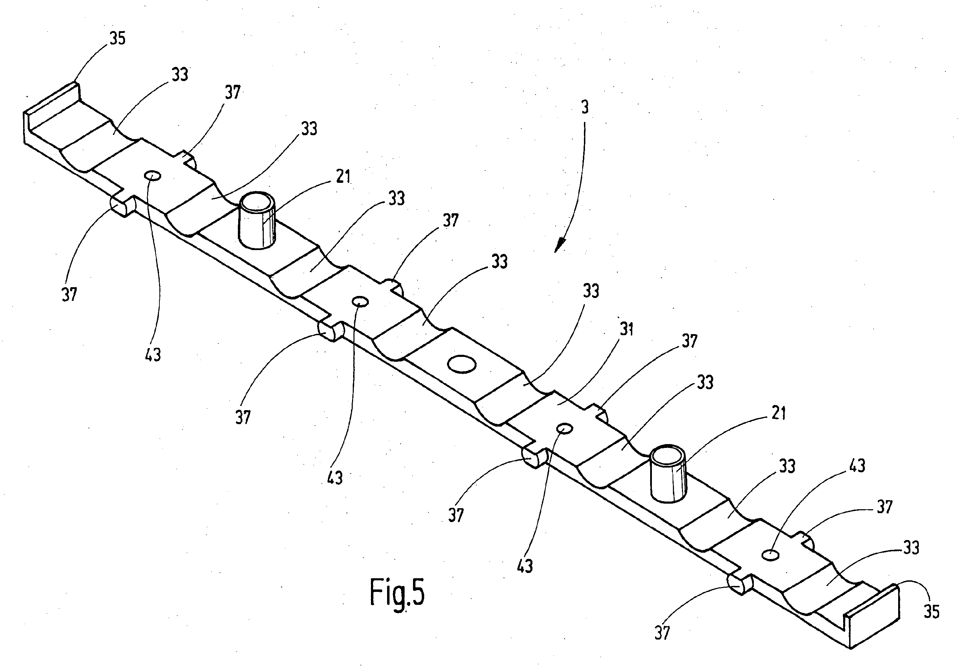

Die Fig. 1 verdeutlicht ein Einsatzbeispiel des erfindungsgemäßen Befestigungssystems für die Anbringung einer Leitungsreihe an einer in der Zeichnung nicht dargestellten Reaktorinnenwand, wobei eine Leitungsreihe aus fünfzehn Leitungen 1 in Form von Heizschläuchen mittels des zu beschreibenden Ausführungsbeispiels des Befestigungssystems fixiert sind, von dem in Fig. 1 lediglich die jeweilige Deckelleiste 3 schematisiert angedeutet ist. Die Fig. 2 zeigt eine Reihenleiste im Zustand der Fixierung von acht Leitungen 1 als Teilbestandteil der in Fig. 1 gezeigten Anordnung. Als Grundbestandteil weist die Reihenleiste eine in Fig. 4 in Einzeldarstellung gezeigte Trägerleiste 5 auf, die mit ihrer ebenen Unterseite 7 an der betreffenden Wandfläche anliegt und daran mittels einer Wandbefestigungsschraube (die nicht dargestellt ist) verankerbar ist, die eine in der Trägerleiste 5 zentral angeordnete Bohrung 9 durchgreift, an deren Rand sich ein Sitz 11 für eine nur in Fig. 3 sichtbare Ringscheibe 13 befindet. Wie am besten aus Fig. 3 und 4 erkennbar ist, hat die Trägerleiste 5 eine langgestreckte Balkenform mit einem oberhalb der Unterseite 7 befindlichen, ebenen Leistenboden 15. Dieser erstreckt sich mit Unterbrechungen über die Trägerleiste 5, wobei es sich bei den Unterbrechungen hauptsächlich um vertiefte, teilzylindrische Aufnahmemulden 17 für die Leitungen 1 handelt. Weitere Unterbrechungen sind die Bohrung 9 für die Wandbefestigungsschraube (nicht gezeigt) sowie Führungsbohrungen 19, die sich in gleichen Abständen von der zentral gelegenen Bohrung 9 befinden und für die Zentrierung von in sie eingreifenden Führungszapfen 21 (Fig. 5) der Deckelleiste 3 bestimmt sind.

Wie am deutlichsten aus Fig. 4 zu ersehen ist, weist die Trägerleiste 5 beidseits in Längsrichtung verlaufende Seitenwände 23 und 25 als seitliche Begrenzung des Leistenbodens 15 auf. In den Seitenwänden 23, 25 befinden sich der Form der Aufnahmemulden 17 angepaßte Aussparungen, an deren Endrändern gegeneinander vorstehende Rastnasen 29, die in den Figuren nur teilweise beziffert sind, Rastelemente bilden, durch die eingelegte Leitungen 1 durch Rastung vorfixiert sind, bevor die Deckelleiste 3 als endgültiges Verschlusselement angebracht ist.

Die langgestreckte Deckelleiste 3, von der in Fig. 5 die Unterseite sichtbar ist, ist zwischen die Seitenwände 23 und 25 der Trägerleiste 5 passend einsetzbar, wobei die ebene Unterseite der Deckelleiste 3 eine ebene Deckfläche 31 zur Anlage am Leistenboden 15 der Trägerleiste 5 bildet. Wie der Leistenboden 15 ist auch die Deckfläche 31 durch Vertiefungen 33 unterbrochen, die den Abschluß der Aufnahmemulden 17 der Trägerleiste 5 bilden. Abgewinkelte Endteile 35 übergreifen Endränder der Trägerleiste 5. Zur Bildung einer Schnappverbindung mit der Trägerleiste 5 sind an der Deckelleiste 4 mehrere Rastzapfen 37 seitlich angeformt, die in Rastkerben 39 in den Seitenwänden 23, 25 der Trägerleiste 5 eingreifen, die der Übersichtlichkeit der Zeichnungen wegen nur teilweise beziffert sind und an deren Rand sich Rastnasen 41 (ebenfalls nicht sämtliche beziffert) befinden, die eine Schnappsicherung der Rastzapfen 37 bilden. Wenn gewünscht, kann mittels Schraubenlöchern 43 eine Verschraubung der Deckelleiste 3 mit der Trägerleiste 5 vorgesehen sein, wie in Fig. 3 mit Verbindungsschrauben 45 angedeutet.

Wie bereits erwähnt, können mehrere Reihenleisten zur Bildung einer beliebigen Reihenlänge zusammengesteckt werden. Zu diesem Zweck befinden sich an einem Ende der Trägerleiste 5 eine abgewinkelte Steckverbindungsnase 47 und am jeweils anderen Ende eine entsprechende Einstecknut 49.

## Patentansprüche

1. Befestigungssystem für Reihen nebeneinander liegender Leitungen (1) an Wandflächen, mit einer an der betreffenden Wandfläche verankerbaren Trägerleiste (5), die eine Reihe von in Längsrichtung der Trägerleiste (5) hintereinander angeordneter Aufnahmemulden (17) für je eine sich quer zur Längsrichtung erstreckende Leitung (1) aufweist, mit am Einlegebereich für die Leitungen (1) an den Aufnahmemulden (17) vorgesehenen Rastelementen (29) zur Vorfixierung der in die jeweilige Aufnahmemulde (17) eingelegten Leitung (1) und mit einer Deckelleiste (3), die als die endgültige Fixierung sämtlicher eingelegter Leitungen (1) bildendes Verschlusselement mit der Trägerleiste (5) verbindbar ist, wobei die Trägerleiste (5) eine ebene Unterseite (7) zur Anlage an der Wandfläche und oberhalb der Unterseite (7) zwischen den Aufnahmemulden (17) einen ebenen Leistenboden (15) mit darin befindlichen teilzylindrischen Vertiefungen für die Aufnahmemulden (17) aufweist, **dadurch gekennzeichnet, dass** zwischen den Aufnahmemulden (17) vom Leistenboden (15) Seitenwände (23, 25) mit U-förmigen, den Aufnahmemulden (17) angepassten Aussparungen vorstehen, und dass an den Endrändern der Aussparungen gegeneinander vorspringende Rastnasen (29) die Rastelemente für die Vorfixierung der eingelegten Leitungen bilden.

2. Befestigungssystem nach Anspruch 1, **dadurch gekennzeichnet, dass** die Deckelleiste (3) durch Verclipsen (37, 39, 41) mit der Trägerleiste (5) verbindbar ist.

3. Befestigungssystem nach einem der vorstehenden Ansprüche, **dadurch gekennzeichnet, dass** die Seitenwände (23, 25) der Trägerleiste (5) mit dem zwischen ihnen befindlichen Leistenboden (15) ein U-Profil begrenzen, in das die Deckelleiste (3) zwischen die Seitenwände (23, 25) einsetzbar ist.

4. Befestigungssystem nach einem der vorstehenden Ansprüche, **dadurch gekennzeichnet, dass** die Deckelleiste (3) zur Anlage am Leistenboden (15) der Trägerleiste (5) eine ebene Deckfläche (31) aufweist, in der Vertiefungen (33) als Abschluß der Aufnahmemulden (17) ausgebildet sind.

5. Befestigungssystem nach einem der vorstehenden Ansprüche, **dadurch gekennzeichnet, dass** an der Deckelleiste (3) senkrecht zur Längsachse seitlich vorspringende Rastzapfen (37) vorhanden sind, die in zugeordnete, mit Rastnasen (41) versehene Rastkerben (39) in den Seitenwänden (23, 25) der Trägerleiste (5) einschnappbar sind.

6. Befestigungssystem nach einem der vorstehenden Ansprüche, **dadurch gekennzeichnet, dass** an der Deckelleiste (3) aus der Deckfläche (31) vorspringende Führungszapfen (21) zur Zusammenwirkung mit in der Trägerleiste (5) vorgesehenen Führungsbohrungen (19) vorhanden sind.

7. Befestigungssystem nach einem der vorstehenden Ansprüche, **dadurch gekennzeichnet, dass** die Trägerleisten (5) durch an ihren Enden vorgesehene Anschlußelemente (47, 49) für gewünschte Längen der Leitungsreihen zusammensteckbar sind.

8. Befestigungssystem nach einem der vorstehenden Ansprüche, **dadurch gekennzeichnet, dass** Trägerleiste (5) und Deckelleiste (3) jeweils einteilig aus Kunststoff gefertigt sind.

9. Verwendung des Befestigungssystems nach einem der vorstehenden Ansprüche zur Befestigung von Heizschläuchen oder -rohren an Wandflächen eines Biogasreaktors.

## Claims

1. A fastening system for rows of lines (1) lying next to one another on wall surfaces, comprising a carrier strip (5) which can be anchored on the respective wall surface and which has a row of accommodating recesses (17), arranged one behind the other in the longitudinal direction of the carrier strip (5), for each line (1) extending transversely to the longitudinal direction, comprising locking elements (29) provided in the insertion region for the lines (17) at the accommodating recesses (17) for the pre-fixing of the line (1) inserted into the respective accommodating recess (17), and comprising a cover strip (3) which, as a closure element forming the final fixing for all of the inserted lines (1), can be connected to the carrier strip (5), the carrier strip (5) having a flat lower side (7) for resting against the wall surface and above the lower side (7), between the accommodating recesses (17) having a flat strip base (15) with partially cylindrical indentations for the accommodating recesses (17) located therein, **characterised in that** between the accommodating recesses (17) side walls (23, 25) with U-shaped slots adapted to the accommodating recesses (17) project from the strip base (15), and that at the end edges of the slots locking lugs (29) projecting towards one another form the locking elements for the pre-fixing of the inserted lines.

2. The fastening system according to Claim 1, **characterised in that** the cover strip (3) can be connected to the carrier strip (5) by clipping (37, 39,41).

3. The fastening system according to any of the preceding claims, **characterised in that** the side walls (23, 25) of the carrier strip (5) define with the strip base (15) located between them a U-shaped profile into which the cover strip (3) can be inserted between the side walls (23, 25).

4. The fastening system according to any of the preceding claims, **characterised in that** the cover strip (3) has a flat covering surface (31) for resting against the strip base (15) of the carrier strip (5) and in which indentations (33) are formed to complete the accommodating recesses (17).

5. The fastening system according to any of the preceding claims, **characterised in that** locking pins (37) projecting to the side are provided on the cover strip (3) perpendicular to the longitudinal axis which can be snapped into assigned locking grooves (39), provided with locking lugs (41), in the side walls (23, 25) of the carrier strip (5).

6. The fastening system according to any of the preceding claims, **characterised in that** guide pins (21) projecting from the covering surface (31) are provided on the cover strip (3) in order to co-operate with guide bore holes (19) provided in the carrier strip (5).

7. The fastening system according to any of the preceding claims, **characterised in that** the carrier strips (5) can be put together by connection elements (47, 49) provided at their ends for desired lengths of the rows of lines.

8. The fastening system according to any of the preceding claims, **characterised in that** the carrier strip (5) and the cover strip (3) are respectively produced in one piece from plastic.

9. The use of the fastening system according to any of the preceding claims for the fastening of heating tubes or pipes to wall surfaces of a biogas reactor.

## Revendications

1. Système de fixation pour des rangées de conduits (1) les uns à côté des autres sur des surfaces de paroi, comprenant une réglette (5) formant support, qui peut être ancrée sur la surface de paroi concernée et qui a une rangée d'auges (17) de réception disposées les unes derrière les autres dans la direction longitudinale de la réglette (5) de support pour respectivement un conduit (1) s'étendant transversalement à la direction longitudinale, comprenant des éléments (29) d'encliquetage prévus sur les auges (17) de réception dans la zone de pose des conduits (1) pour l'immobilisation au préalable du conduit (1) posé dans l'auge (17) de réception respective et comprenant une réglette (3) formant couvercle, qui peut, en tant qu'élément de fermeture formant l'immobilisation finale de l'ensemble des conduits (1) posés, être reliée à la réglette (5) formant support, la réglette formant support ayant un côté (7) inférieur plan pour s'appliquer à la surface de paroi et, au-dessus du côté (7) inférieur entre les auges (17) de réception, un fond (15) de réglette plan ayant des cavités partiellement cylindriques, qui s'y trouvent pour les auges (17) de réception, **caractérisé en ce que**, entre les auges (17) de réception, font saillie du fond (15) de la réglette des parois (23, 25) latérales à évidements en forme de U adaptés aux auges (17) de réception et **en ce que**, sur les bords d'extrémité des évidements, des becs (29) d'encliquetage en saillie réciproquement forment les éléments d'encliquetage pour l'immobilisation préalable des conduits posés.

2. Système de fixation suivant la revendication 1, **caractérisé en ce que** la réglette (3) formant couvercle peut être reliée à la réglette (5) formant support par clipsage (37, 39, 41).

3. Système de fixation suivant l'une des revendications précédentes, **caractérisé en ce que** les parois (23, 25) latérales de la réglette (5) formant support délimitent avec le fond (15) de la réglette se trouvant entre elles un profil en U, dans lequel la réglette (3) formant couvercle peut être insérée entre les parois (23, 25) latérales.

4. Système de fixation suivant l'une des revendications précédentes, **caractérisé en ce que** la réglette (3) formant couvercle a, pour s'appliquer au fond (15) de la réglette (5) formant support, une surface (31) de couverture plane, dans laquelle des évidements (33) sont constitués comme fermeture des auges (17) de réception.

5. Système de fixation suivant l'une des revendications précédentes, **caractérisé en ce que**, sur la réglette (3) formant couvercle, il y a des tenons (37) d'encliquetage en saillie latéralement, perpendiculairement à l'axe longitudinal, qui peuvent s'encliqueter dans des encoches (39) d'encliquetage associées et pourvues de becs (41) d'encliquetage ménagées dans les parois (23, 25) latérales de la réglette (5) formant support.

6. Système de fixation suivant l'une des revendications précédentes, **caractérisé en ce que**, sur la réglette (3) formant couvercle, il y a des tenons (21) de guidage en saillie de la surface (31) de couverture et destinés à coopérer avec des trous (19) de guidage prévus dans la réglette (5) formant support.

7. Système de fixation suivant l'une des revendications précédentes, **caractérisé en ce que** les réglettes (5) formant support peuvent, par des éléments (47, 49) de raccordement prévus à leurs extrémités, être enfilées ensemble pour des longueurs souhaitées de rangées de conduits.

8. Système de fixation suivant l'une des revendications précédentes, **caractérisé en ce que** des réglettes (5) formant support et des réglettes (3) formant couvercle sont fabriquées respectivement en une seule pièce en matière plastique.

9. Utilisation du système de fixation suivant l'une des revendications précédentes pour la fixation de conduits souples de chauffage ou de tubes de chauffage sur des surfaces de paroi d'un réacteur de biogaz.
